(19) Europäisches Patentamt
European Patent Office
Office européen des brevets

(11) **EP 4 596 508 A1**

(12) **EUROPEAN PATENT APPLICATION**
published in accordance with Art. 153(4) EPC

(43) Date of publication:
06.08.2025 Bulletin 2025/32

(51) International Patent Classification (IPC):
*C03C 3/097* (2006.01)    *G02B 1/00* (2006.01)

(21) Application number: 23871849.8

(22) Date of filing: 11.09.2023

(52) Cooperative Patent Classification (CPC):
C03C 3/097; G02B 1/00

(86) International application number:
PCT/JP2023/032958

(87) International publication number:
WO 2024/070613 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 JP 2022158015

(71) Applicant: NIKON CORPORATION
Tokyo 140-8601 (JP)

(72) Inventors:
• TAKASU, Shuhei
  Tokyo 140-8601 (JP)
• YOSHIMOTO, Kohei
  Tokyo 140-8601 (JP)

(74) Representative: Viering, Jentschura & Partner
mbB
Patent- und Rechtsanwälte
Grillparzerstraße 14
81675 München (DE)

(54) **OPTICAL GLASS, OPTICAL ELEMENT, OPTICAL SYSTEM, CEMENTED LENS, OBJECTIVE LENS FOR MICROSCOPE, INTERCHANGEABLE LENS FOR CAMERA, AND OPTICAL DEVICE**

(57) An optical glass includes, by mol% of a cation, 5% to 35% of a content rate of $La^{3+}$; 5% to 25% of a content rate of $Si^{4+}$; 5% to 35% of a content rate of $Nb^{5+}$; 5% to 35% of a content rate of $Al^{3+}$; and 45% to 80% of a total content rate of $Ti^{4+}$, $Zr^{4+}$, $Nb^{5+}$, $Ta^{5+}$, and $Al^{3+}$ ($Ti^{4+} + Zr^{4+} + Nb^{5+} + Ta^{5+} + Al^{3+}$).

*Fig. 1*

EP 4 596 508 A1

**Description**

TECHNICAL FIELD

The present invention relates to optical glass, optical elements, optical systems, cemented lenses, microscope objective lenses, interchangeable camera lenses, and optical devices. The present invention claims priority to Japanese Patent Application No. 2022-158015, filed on September 30, 2022, the contents of which are incorporated by reference herein in its entirety in designated states where the incorporation of documents by reference is approved.

BACKGROUND ART

An optical glass is used in various optical elements and optical devices, and, for example, Patent Literature 1 discloses a halide glass used from an ultraviolet region to an infrared region. In order to increase a degree of flexibility in design of an optical system used in an optical device, development of an optical glass having a high refractive index has been required.

Citation List

Patent Literature

[Patent Document 1] JP 07-081973 A

SUMMARY

An aspect of the present invention provides an optical glass comprising: by mol% of a cation, 5% to 35% of a content rate of $La^{3+}$; 5% to 25% of a content rate of $Si^{4+}$; 5% to 35% of a content rate of $Nb^{5+}$; 5% to 35% of a content rate of $Al^{3+}$; and 45% to 80% of a total content rate of $Ti^{4+}$, $Zr^{4+}$, $Nb^{5+}$, $Ta^{5+}$, and $Al^{3+}$ ($Ti^{4+} + Zr^{4+} + Nb^{5+} + Ta^{5+} + Al^{3+}$).

Another aspect of the present invention provides an optical element using the above optical glass.

Another aspect of the present invention provides an optical system including the above optical element.

Another aspect of the present invention provides a microscope objective lens including the optical system containing the above optical element.

Another aspect of the present invention provides an interchangeable camera lens including the optical system containing the above optical element.

Another aspect of the present invention provides an optical device including the optical system containing the above optical element.

Another aspect of the present invention provides a cemented lens having a first lens element and a second lens element, wherein at least one of the first lens element and the second lens element is the optical glass described above.

Another aspect of the present invention provides an optical system including the above cemented lens.

Another aspect of the present invention provides a microscope objective lens including the optical system containing the above cemented lens.

Another aspect of the present invention provides an interchangeable camera lens including the optical system containing the above cemented lens.

Another aspect of the present invention provides an optical device including the optical system containing the above cemented lens.

BRIEF DESCRIPTION OF THE DRAWINGS

FIG. 1 is a perspective view illustrating an example of an optical device as an imaging device according to the present embodiment.

FIG. 2 is a schematic diagram illustrating another example of an optical device as an imaging device according to the present embodiment, and it is a front view of the imaging device.

FIG. 3 is a schematic diagram illustrating another example of an optical device as an imaging device according to the present embodiment, and it is a back view of the imaging device.

FIG. 4 is a block diagram illustrating an example of a configuration of a multi-photon microscope according to the present embodiment.

FIG. 5 is a schematic diagram illustrating an example of a cemented lens according to the present embodiment.

FIG. 6 is a schematic diagram of an overall configuration of a gas jet floating furnace according to the present embodiment.

FIG. 7 is an enlarged schematic diagram of a pedestal on a stage of the gas jet floating furnace according to the present embodiment.

FIG. 8 is a graph in which an optical constant value ($\nu_d$ - $P_{g,F}$) of each example is plotted.

FIG. 9 is a graph in which an optical constant value ($\nu_d$ - $n_d$) of each example is plotted.

DETAILED DESCRIPTION

Hereinafter, description is made on an embodiment of the present invention (hereinafter, referred to as the "present embodiment"). The present embodiment described below is an example for describing the present invention, and is not intended to limit the present invention to the contents described below. The present invention can be appropriately modified and implemented within the scope of the gist.

Further, the expression that a Q content ratio is "0 - N%" is an expression that includes a case where the Q component is not included and a case where the Q component is more than 0% and is N% or less.

Further, the expression "does not contain a Q component" means that this Q component is substantially not contained, and the content of this component is about an impurity level or less. Impurity level or less means, for example, that it is less than 0.01%.

The expression "devitrification resistance stability" means the resistance to devitrification of glass. Here, "devitrification" refers to a phenomenon in which the transparency of the glass is lost due to crystallization or phase division that occurs when the glass is heated above the glass transition temperature or when the temperature is lowered from the melt state to the liquid phase temperature or lower.

<Optical Glass>

The optical glass of the present embodiment comprises, by mol% of cation:

5% to 35% of a content rate of $La^{3+}$;
5% to 25% of a content rate of $Si^{4+}$;
5% to 35% of a content rate of $Nb^{5+}$;
5% to 35% of a content rate of $Al^{3+}$; and
45% to 80% of a total content rate of $Ti^{4+}$, $Zr^{4+}$, $Nb^{5+}$, $Ta^{5+}$, and $Al^{3+}$ ($Ti^{4+}$ + $Zr^{4+}$ + $Nb^{5+}$ + $Ta^{5+}$ + $Al^{3+}$).

Unless otherwise specified, all component content rates in this specification are expressed in mol% of cation. The mol% of cation refers to the ratio of the molar amount of a specific cation to the total molar amount of all cations in the optical glass. For example, in a case where $SiO_2$ is 50 mol% and $Na_2O$ is 50 mol%, the cation mol% would be 33.3% for $Si^{4+}$ and 66.7% for $Na^+$. The state of the cations is not particularly limited and may include oxides or other forms present in the optical glass.

The optical glass of the present embodiment is a novel optical glass that achieves a high refractive index and high transmittance by adopting a composition system primarily comprising $La_2O_3$ and $Nb_2O_5$. This composition system, which cannot be vitrified using crucible melting, can be obtained using the floating melting method. By achieving both low specific gravity and high devitrification resistance stability, the glass can float easily, enabling the stable production of glass gobs with a diameter of 10 mm or more even using the floating melting method.

The following describes the components of the optical glass of the present embodiment.

$La^{3+}$, for example, is contained as $La_2O_3$ in terms of oxide conversion composition. $La^{3+}$ enhances refractive index and transmittance. However, an increased content rate tends to increase specific gravity. From this perspective, the content rate of $La^{3+}$ is 5% to 35%. The lower limit of this content rate is preferably 8%, more preferably 12%, and even more preferably 15%. The upper limit is preferably 32%, more preferably 29%, and even more preferably 26%.

$Si^{4+}$, for example, is contained as $SiO_2$ in terms of oxide conversion composition. $Si^{4+}$ can enhance devitrification resistance stability while maintaining low specific gravity. However, an increased content rate tends to decrease the refractive index. From this perspective, the content rate of $Si^{4+}$ is 5% to 25%. The lower limit of this content rate is preferably 6%, more preferably 8%, and even more preferably 10%. The upper limit is preferably 24%, more preferably 22%, and even more preferably 20%.

$Nb^{5+}$, for example, is contained as $Nb_2O_5$ in terms of oxide conversion composition. $Nb^{5+}$ enhances refractive index and transmittance. However, an increased content rate tends to lead to high specific gravity. From this perspective, the content rate of $Nb^{5+}$ is 5% to 35%. The lower limit of this content rate is preferably 8%, more preferably 12%, and even more preferably 16%. The upper limit is preferably 32%, more preferably 29%, and even more preferably 26%.

$Al^{3+}$, for example, is contained as $Al_2O_3$ in terms of oxide conversion composition. $Al^{3+}$ enhances devitrification

resistance stability while maintaining low specific gravity. However, an increased content rate tends to decrease the refractive index. From this perspective, the content rate of $Al^{3+}$ is 5% to 35%. The lower limit of this content rate is preferably 8%, more preferably 12%, and even more preferably 14%. The upper limit is preferably 32%, more preferably 29%, and even more preferably 26%.

$Zr^{4+}$, for example, is contained as $ZrO_2$ in terms of oxide conversion composition. $Zr^{4+}$ enhances devitrification resistance stability and refractive index. From this perspective, the content rate of $Zr^{4+}$ is 0% to 15%. The lower limit of this content rate is preferably 2%, more preferably 4%, and even more preferably 6%. The upper limit is preferably 14%, more preferably 12%, and even more preferably 10%.

$Ti^{4+}$, for example, is contained as $TiO_2$ in terms of oxide conversion composition. $Ti^{4+}$ enhances refractive index while maintaining low specific gravity. However, an increased content rate tends to decrease transmittance. From this perspective, the content rate of $Ti^{4+}$ is 0% to 20%. The lower limit of this content rate is preferably 2%, more preferably 4%, and even more preferably 6%. The upper limit is preferably 20%, more preferably 16%, and even more preferably 10%.

$Ta^{5+}$, for example, is contained as $Ta_2O_5$ in terms of oxide conversion composition. $Ta^{5+}$ enhances devitrification resistance while maintaining low dispersion. However, an increased content rate tends to increase specific gravity. From this perspective, the content rate of $Ta^{5+}$ is 0% to 15%. The lower limit of this content rate is preferably 2%, more preferably 3%, and even more preferably 5%. The upper limit is preferably 12%, more preferably 10%, and even more preferably 8%.

The total content rate of $Ti^{4+}$, $Zr^{4+}$, $Nb^{5+}$, $Ta^{5+}$, and $Al^{3+}$ ($Ti^{4+} + Zr^{4+} + Nb^{5+} + Ta^{5+} + Al^{3+}$) is 45% to 80%. The lower limit of this total content rate is preferably 50%, more preferably 54%, and even more preferably 56%. The upper limit is preferably 76%, more preferably 73%, and even more preferably 70%. By setting the total content rate of ($Ti^{4+} + Zr^{4+} + Nb^{5+} + Ta^{5+} + Al^{3+}$) within this range, it is possible to achieve both high refractive index and high transmittance while maintaining devitrification resistance stability during melting.

The glass composition of the present embodiment may further include one or more optional components such as $Y^{3+}$ or $B^{3+}$.

$Y^{3+}$, for example, is contained as $Y_2O_3$ in terms of oxide conversion composition. $Y^{3+}$ can increase refractive index and transmittance without impairing low dispersion. From this perspective, the content rate of $Y^{3+}$ is 0% to 15%. The lower limit of this content rate is preferably 2%, more preferably 4%, and even more preferably 6%. The upper limit is preferably 12%, more preferably 10%, and even more preferably 8%. It is preferable to contain both $La^{3+}$ and $Y^{3+}$.

$B^{3+}$, for example, is contained as $B_2O_3$ in terms of oxide conversion composition and constitutes a network-forming oxide. $B^{3+}$ is a volatile component, and excessive introduction may cause compositional variation during manufacturing, leading to the manifestation of striae. From this perspective, it is preferable to substantially exclude $B^{3+}$. If $B^{3+}$ is included, its upper limit is preferably 10%, more preferably 5%, and even more preferably 2%.

In addition, as necessary, for the purpose of clarifying, coloring, decolorization, fine adjustment of optical constant values, etc., a known clarifying agent, a colorant, a defoaming agent, a fluorine compound, and other components can be added to the glass composition in an appropriate amount. Further, not limited to the above components, other components can be added within the range where the effect of the optical glass according to the present embodiment can be obtained.

As the raw material, it is preferable to use a high-purity product with a low content rate of impurities. A high-purity product contains 99.85% by mass or more of the component. By using a high-purity product, the amount of impurities decreases, and as a result, the internal transmittance of the optical glass tends to be high.

Next, description is made on physical property values of the optical glass according to the present embodiment.

From the perspective of visible light transmittance in an optical system, it is preferable that the optical glass according to the present embodiment has a high internal transmittance. Considering this situation, the optical glass according to the present embodiment preferably has a wavelength ($\lambda_{80}$) at which the internal transmittance per 10 mm is 80% of 420 nm or less. The upper limit of the wavelength at which $\lambda_{80}$ is achieved is preferably 405 nm, more preferably 400 nm, and even more preferably 395 nm.

From the perspective of lens miniaturization, it is desirable for the optical glass of the present embodiment to have a high refractive index ($n_d$). However, in general, a higher refractive index ($n_d$) tends to reduce transmittance. Considering these circumstances, the refractive index ($n_d$) of the present embodiment for the d-line is within the range of 1.95 to 2.15. The lower limit of the refractive index ($n_d$) is preferably 1.96, more preferably 1.97, and even more preferably 1.99. The upper limit is preferably 2.12, more preferably 2.08, and even more preferably 2.05.

The Abbe number ($\nu_d$) of the optical glass in the present embodiment ranges from 20 to 35. The lower limit of the Abbe number ($\nu_d$) is preferably 22, more preferably 24, and even more preferably 25. The upper limit is preferably 32, more preferably 30, and even more preferably 29.

From the perspective of lens aberration correction, the partial dispersion ratio ($P_{g,F}$) of the optical glass in the present embodiment is 0.55 to 0.65. The lower limit of the partial dispersion ratio ($P_{g,F}$) is preferably 0.56, more preferably 0.57, and even more preferably 0.58. The upper limit of the partial dispersion ratio ($P_{g,F}$) is preferably 0.64, more preferably 0.62, and even more preferably 0.61. Moreover, the partial dispersion ratio ($P_{g,F}$) of the optical glass in the present embodiment preferably satisfies the following formula: $-0.00403 \times \nu_d + 0.704 < P_{g,F} < -0.00403 \times \nu_a + 0.717$ ... (1) The partial dispersion ratio ($P_{g,F}$) is a value calculated based on refractive indices measured using the V-block method.

The optical glass in the present embodiment has a length of at least 10 mm in the longitudinal direction. The longitudinal length is preferably at least 11 mm, more preferably at least 12 mm, and even more preferably at least 13 mm. The "longitudinal length" here refers to the maximum value of the diameter direction of a glass gob, and in the case of an approximately spherical shape, it refers to the diameter value.

The optical glass in the present embodiment preferably has a thickness (T) of at least 4 mm, more preferably at least 5 mm, and even more preferably at least 5.5 mm. The "thickness" here refers to the height in the direction perpendicular to the maximum diameter of the glass gob (diameter D), and in the case of an approximately spherical shape, it refers to the diameter value.

The optical glass in the present embodiment preferably has a weight of at least 1.5 g, more preferably at least 2.0 g, and even more preferably at least 2.5 g.

When the optical glass of the present invention is manufactured using a floating furnace, it is desirable for its specific gravity to be 6.0 or less. Considering this, the optical glass in the present embodiment has a specific gravity ($S_g$) of 4.6 to 5.6. The lower limit of the specific gravity is preferably 4.7, more preferably 4.8, and even more preferably 4.9. The upper limit is preferably 5.5, more preferably 5.3, and even more preferably 5.1.

The optical glass of the present embodiment exhibits higher devitrification resistance stability as the temperature difference ($\Delta T = T_x - T_g$) between the glass transition temperature ($T_g$) and the crystallization onset temperature ($T_x$) increases. Considering this, the temperature difference ($\Delta T = T_x - T_g$) between the glass transition temperature ($T_g$) and the crystallization onset temperature ($T_x$) in the optical glass of the present embodiment is 80°C to 200°C. The lower limit of the difference is preferably 100°C, more preferably 130°C, and even more preferably 160°C. The upper limit of the difference is preferably 190°C, more preferably 180°C, and even more preferably 170°C. $\Delta T$ can be used as an indicator of devitrification resistance stability. Generally, a higher $\Delta T$ indicates higher devitrification resistance stability of the glass. In the present embodiment, both the glass transition temperature ($T_g$) and the crystallization onset temperature ($T_x$) can be measured through differential thermal analysis.

From the viewpoint described above, the optical glass according to the present embodiment can be suitably used as an optical element included in, for example, an optical instrument. Such optical elements include mirrors, lenses, prisms, filters, and the like. Examples of the optical system in which the optical element is used include an objective lens, a light collecting lens, an imaging lens, an interchangeable camera lens, and the like. And these optical systems can be suitably used for various optical devices of imaging devices such as interchangeable lens cameras and non-interchangeable lens cameras, and microscope apparatuses such as fluorescence microscopes and multiphoton microscopes. Such optical devices are not limited to the above-described imaging devices and microscopes, and include telescopes, binoculars, laser distance meters, projectors, and the like, but are not limited thereto. Examples of these will be described below.

<Imaging Device>

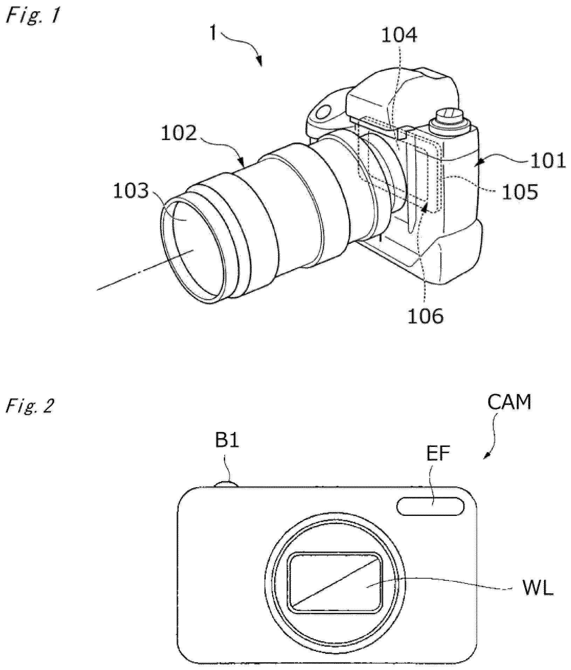

FIG. 1 is a perspective view showing an example in which the optical device according to the present embodiment is used as an imaging device. An imaging device 1 is a so-called digital single-lens reflex camera (a lens-interchangeable camera), and a photographing lens 103 (an optical system) includes an optical element including, as a base material, the optical glass according to the present embodiment. A lens barrel 102 is mounted to a lens mount (not illustrated) of a camera body 101 in a removable manner. An image is formed with light, which passes through the lens 103 of the lens barrel 102, on a sensor chip (solid-state imaging elements) 104 of a multi-chip module 106 arranged on a back surface side of the camera body 101. The sensor chip 104 is a so-called bare chip such as a CMOS image sensor. The multi-chip module 106 is, for example, a Chip On Glass (COG) type module including the sensor chip 104 being a bare chip mounted on a glass substrate 105.

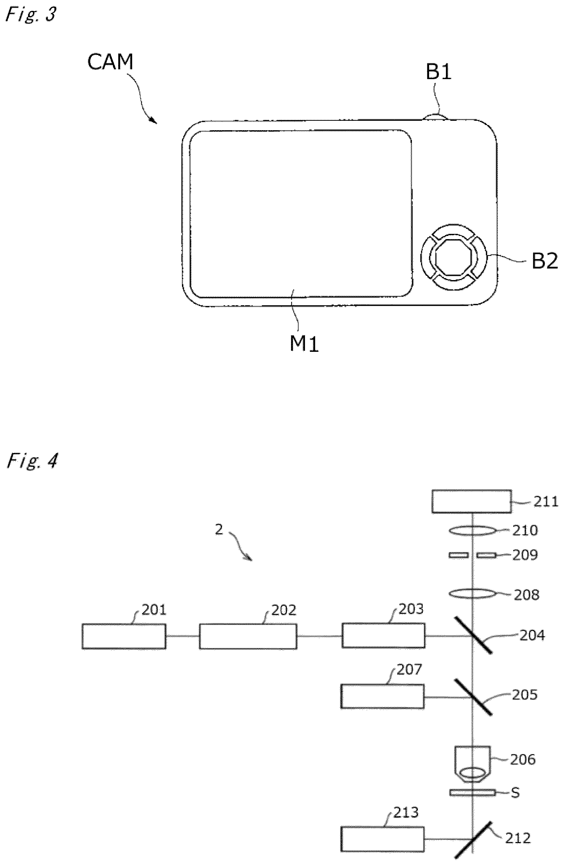

FIG. 2 and 3 are schematic diagrams showing another example in which the optical device according to the present embodiment is used as an imaging device. FIG. 2 shows a front view of the imaging device CAM, and FIG. 3 shows a rear view of the imaging device CAM. The imaging device CAM is a so-called digital still camera (non-interchangeable lens cameras), and a photographing lens WL (an optical system) includes an optical element including, as a base material, the optical glass according to the present embodiment.

When a power button (not illustrated) of the imaging device CAM is pressed, a shutter (not illustrated) of the photographing lens WL is opened, light from an object to be imaged (a body) is converged by the photographing lens WL and forms an image on imaging elements arranged on an image surface. An object image formed on the imaging elements is displayed on a liquid crystal monitor M arranged on the back of the imaging device CAM. After determining the composition of the subject image while looking at the liquid crystal monitor M, the photographer presses down the release button B1 to capture the subject image with the image sensor, and records and saves it in a memory (not illustrated).

An auxiliary light emitting unit EF that emits auxiliary light in a case that the object is dark and a function button B2 to be used for setting various conditions of the imaging device CAM and the like are arranged on the imaging device CAM.

The optical system used in such a digital camera or the like is required to have higher resolution, low chromatic aberration, and miniaturization. In order to realize these, it is effective to use glasses with different dispersion characteristics in the optical system. In particular, the demand for glass with low dispersion but higher partial dispersion ratio ($P_{g,F}$) is high. From this viewpoint, the optical glass according to the present embodiment is suitable as a member of the optical device. Note that examples of the optical device applicable in the present embodiment include not only the above-described imaging device but also a projector and the like. The optical element is not limited to a lens, and examples thereof include prisms and the like.

<Microscope>

FIG. 4 is a block diagram illustrating an example of a configuration of a multi-photon microscope 2 according to the present embodiment. A multi-photon microscope 2 includes an objective lens 206, a condensing lens 208, and an image forming lens 210. At least one of the objective lens 206, the condensing lens 208, and the image forming lens 210 includes an optical element including, as a base material, the optical glass according to the present embodiment. Hereinafter, description is mainly made on the optical system of the multi-photon microscope 2.

A pulse laser device 201 emits ultrashort pulse light having, for example, a near infrared wavelength (approximately 1,000 nm) and a pulse width of a femtosecond unit (for example, 100 femtoseconds). In general, ultrashort pulse light immediately after being emitted from the pulse laser device 201 is linearly polarized light that is polarized in a predetermined direction.

A pulse division device 202 divides the ultrashort pulse light, increases a repetition frequency of the ultrashort pulse light, and emits.

A beam adjustment unit 203 has a function of adjusting a beam diameter of the ultrashort pulse light, which enters from the pulse division device 202, to a pupil diameter of the objective lens 206, a function of adjusting convergence and divergence angles of the ultrashort pulse light in order to correct chromatic aberration (a focus difference) on an axis of a wavelength of light emitted from a sample S and the wavelength of the ultrashort pulse light, a pre-chirp function (group velocity dispersion compensation function) providing inverse group velocity dispersion to the ultrashort pulse light in order to correct the pulse width of the ultrashort pulse light, which is increased due to group velocity dispersion at the time of passing through the optical system, and the like.

The ultrashort pulse light emitted from the pulse laser device 201 has a repetition frequency increased by the pulse division device 202, and is subjected to the above-mentioned adjustments by the beam adjustment unit 203. Furthermore, the ultrashort pulse light emitted from the beam adjustment unit 203 is reflected on a dichroic mirror 204 in a direction toward a dichroic mirror, passes through the dichroic mirror 205, is converged by the objective lens 206, and is radiated to the sample S. At this time, an observation surface of the sample S may be scanned with the ultrashort pulse light through use of scanning means (not illustrated).

For example, when fluorescence observation of sample S, in the irradiated region of the ultrashort pulsed light of the sample S and in the vicinity thereof, the fluorescent dye on which the sample S is stained is multiphoton excited, and fluorescence with a wavelength shorter than ultrashort pulsed light, which is an infrared wavelength (hereinafter referred to as "observation light".), is emitted.

The observation light emitted from the sample S in a direction toward the objective lens 206 is collimated by the objective lens 206, and is reflected on the dichroic mirror 205 or passes through the dichroic mirror 205 depending on the wavelength.

The observation light reflected on the dichroic mirror 205 enters a fluorescence detection unit 207. For example, the fluorescence detection unit 207 is formed of a barrier filter, a photo multiplier tube (PMT), or the like, receives the observation light reflected on the dichroic mirror 205, and outputs an electronic signal depending on an amount of the light. The fluorescence detection unit 207 detects the observation light over the observation surface of the sample S, in conformity with the ultrashort pulse light scanning on the observation surface of the sample S.

Note that, all the observation light emitted from the sample S in a direction toward the objective lens 206 may be detected by the fluorescence detection unit 211 by excluding the dichroic mirror 205 from the optical path. In this case, the observation light is de-scanned by scanning means (not illustrated), passes through the dichroic mirror 204, is converged by the condensing lens 208, passes through a pinhole 209 provided at a position substantially conjugate to a focal position of the objective lens 206, passes through the image forming lens 210, and enters a fluorescence detection unit 211.

For example, the fluorescence detection unit 211 is formed of a barrier filter, a PMT, or the like, receives the observation light formed at the reception surface of the fluorescence detection unit 211 by the image forming lens 210, and outputs an electronic signal depending on an amount of the light. The fluorescence detection unit 211 detects the observation light over the observation surface of the sample S, in conformity with the ultrashort pulse light scanning on the observation surface of the sample S.

Furthermore, all observation light emitted from the sample S toward the objective lens 206 can be detected by the fluorescence detection unit 211 by removing the dichroic mirror 205 from the optical path.

The observation light emitted from the sample S in a direction opposite to the objective lens 206 is reflected on a dichroic mirror 212, and enters a fluorescence detection unit 213. The fluorescence detection unit 113 is formed of, for example, a barrier filter, a PMT, or the like, receives the observation light reflected on the dichroic mirror 212, and outputs an electronic signal depending on an amount of the light. The fluorescence detection unit 213 detects the observation light over the observation surface of the sample S, in conformity with the ultrashort pulse light scanning on the observation surface of the sample S.

The electronic signals output from the fluorescence detection units 207, 211, and 213 are input to, for example, a computer (not illustrated). The computer is capable of generating an observation image, displaying the generated observation image, storing data on the observation image, based on the input electronic signals.

<Cemented lens>

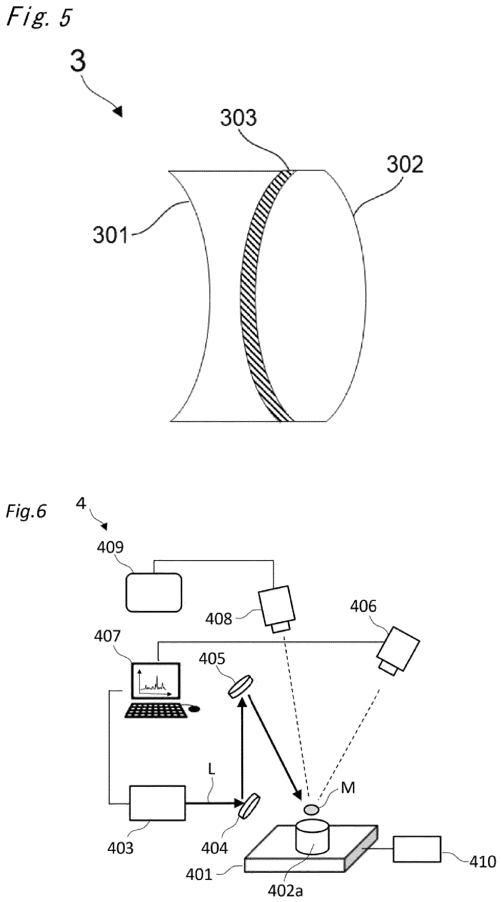

FIG. 5 is a schematic diagram illustrating an example of a cemented lens according to the present embodiment. The cemented lens 3 is a composite lens having a first lens element 301 and a second lens element 302. At least one of the first lens element and the second lens element uses the optical glass according to the present embodiment. The first lens element and the second lens element are joined via a joint member 303. As the joint member 303, a known adhesive or the like can be used. Note that "lens component" means each lens constituting a single lens or a cemented lens.

The cemented lens according to the present embodiment is useful from the viewpoint of chromatic aberration correction, and can be suitably used for the above-described optical elements, optical systems, optical devices, and the like. And the optical system including the cemented lens can be particularly suitably used for interchangeable camera lenses, optical devices, and the like. Note that in the above-described aspect, a cemented lens using two lens components has been described, but is not limited thereto, and may be a cemented lens using three or more lens components. When a cemented lens using three or more lens components is used, at least one of the three or more lens components may be formed using the optical glass according to the present embodiment.

<Method for Manufacturing Optical Glass>

The optical glass according to the present embodiment can be manufactured by using a floating furnace, for example. There are electrostatic, electromagnetic, sonic, magnetic, and gas jet floating furnaces, and the like, which are not particularly limited, but a gas jet floating furnace is preferably used for floating fusion of an oxide. Hereinafter, a manufacturing method using a gas jet floating furnace will be described as one example.

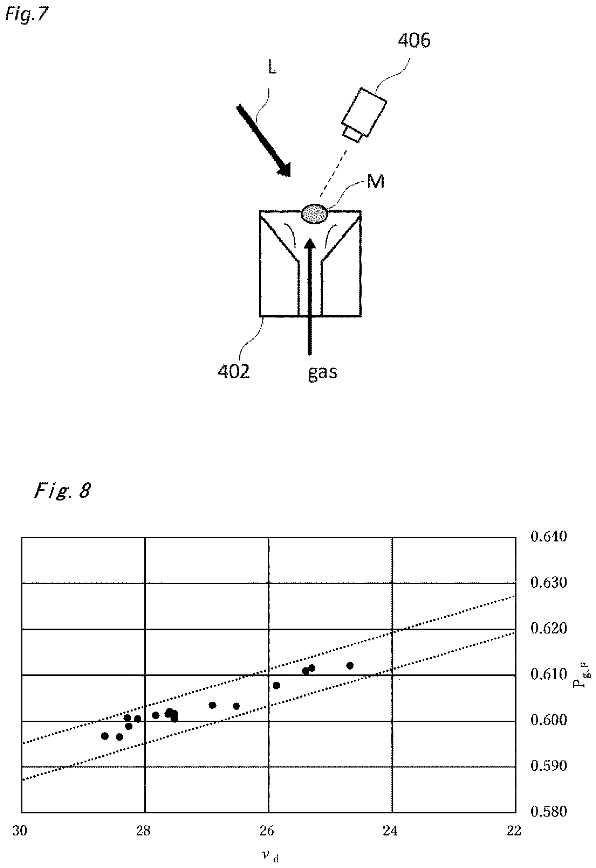

FIG. 6 illustrates a schematic diagram of an overall configuration of the gas jet floating furnace, and FIG. 7 is an enlarged schematic diagram of a pedestal on a stage of the gas jet floating furnace.

In a gas jet floating furnace 4, a raw material M is disposed on a pedestal 402 on a stage 401. Then, laser light L emitted from a laser light source 403 is applied to the raw material M via a mirror 404 and a mirror 405. A temperature of the raw material M heated by application of the laser light L is monitored by a radiation thermometer 406. Output of the laser light source 403 is controlled by a computer 407, based on temperature information of the raw material M monitored by the radiation thermometer 406. Further, a state of the raw material M is captured by a CCD camera 408, and is output to a monitor 409 (see FIG. 6). Note that, for example, a carbon dioxide gas laser can be used as a laser light source.

In the gas jet floating furnace 4, the raw material M is in a floating state due to gas sent to the pedestal (see FIG. 7). A flow rate of gas sent to the pedestal is controlled by a gas flow rate regulator 410. For example, non-contact heating can be performed by the laser light L with the raw material M in a floating state by jetting gas from a nozzle having a conical hole. When the raw material M is fused, the raw material M has a spherical shape or an elliptical shape due to its own surface tension, and floats in this state.

Subsequently, when the laser light L is cut off, the raw material that has been brought into a melted liquid state is cooled to acquire a transparent glass. Note that a kind of gas is not particularly limited, and publicly known gas may be adopted as appropriate. Examples of the gas include oxygen, nitrogen, carbon dioxide, argon, air, and the like. A shape of a nozzle and a heating method are not particularly limited, and a publicly known method may be adopted as appropriate.

In the related art, for example, when an optical glass has been manufactured by using a container such as a crucible, a lot of network former oxides such as $SiO_2$, $B_2O_3$, $P_2O_5$, and $GeO_2$ has needed to be contained to increase glass formation performance. Thus, in a case of a glass composition having a great content amount of a material that is not a network former oxide and a small content amount of the network former oxide described above, there has been a circumstance where crystallization (non-uniform nucleation) with a container-melted liquid interface as an origin occurs, and vitrification cannot often be achieved. A glass gob has been sometimes used as a material of an optical lens of various types of optical equipment, but it has been desired that a large glass gob can be stably manufactured.

In this regard, in the present embodiment, for example, when an optical glass is manufactured by a method using the floating furnace described above, there is no contact between a container and a melted liquid, and thus non-uniform nucleation can be suppressed to the maximum. As a result, glass formation from a melted liquid can be greatly promoted, and vitrification can be achieved even with a composition that cannot be manufactured in crucible fusion and has a small content amount of a network former oxide or does not contain the network former oxide at all. By adopting the manufacturing method, the optical glass having a composition system according to the present embodiment in which vitrification could not have been achieved in the related art can be manufactured. Furthermore, a large glass gob as described above can also be manufactured. In addition, the optical glass according to the present embodiment has a high refractive index and has a high abbe number. Since the optical glass according to the present embodiment has many advantages as described above, the optical glass can be applied as a high-refractive low-dispersibility glass material and a wide-band transparent material.

Examples

Next, description is made on examples and comparative examples below, but the present invention is not limited at all by examples below.

<Manufacturing of Optical Glass>

An optical glass in each example and each comparative example has been manufactured according to the following procedure by using the gas jet floating furnace 4 illustrated in FIG.6 and 7. First, the glass raw material selected from the oxide was weighed so as to have the composition (mol% of cation) described in each table. Further, the glass raw material may be selected from hydroxide, carbonate, nitrate, sulfate. Next, the weighed raw materials were mixed in an alumina mortar. This raw material was uniaxially pressurized at 20 MPa, and was formed into a columnar pellet. The acquired pellet was baked at 1000 to 1300 degrees Celsius in an electric furnace for 3 to 6 hours in the atmosphere to manufacture a sintered body. The acquired sintered body was roughly crushed, and 50 to 4000 mg was collected and installed on a nozzle of a pedestal. Then, the raw material was melted by applying a carbon dioxide gas laser from above while jetting air gas. The melted raw material had a spherical shape or an elliptical shape due to its own surface tension, and was brought into a floating state by pressure of the gas. The raw material was cooled by shutting off the laser power when the raw material was completely melted. Annealing was subsequently performed at 760-810°C for 10 hours, producing gobs (glass spheres) with diameters of 10.30-14.55 mm and thicknesses of 5.20-6.04 mm for each example. No visible volatilization, bubbles, or devitrification were observed during melting in any of the examples.

<Evaluation of physical properties>

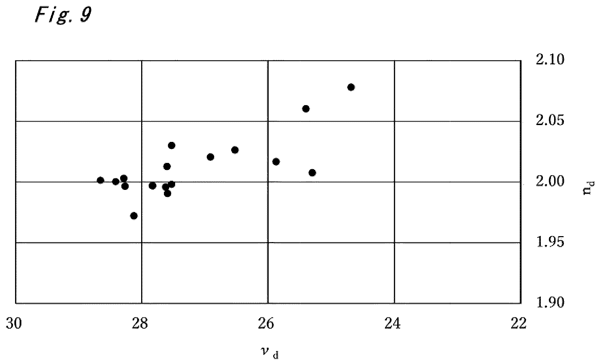

FIG. 8, 9 are graphs in which an optical constant value of each example is plotted.

Measurement of Crystallization Onset Temperature ($T_x$), Glass Transition Temperature ($T_g$), and Temperature Difference ($\Delta T$)

The crystallization onset temperature ($T_x$) and glass transition temperature ($T_g$) were measured using differential thermal analysis during heating at a rate of 10°C/min. The temperature difference ($\Delta T$) was calculated as $T_x - T_g$.

Specific Gravity ($S_g$)

The specific gravity ($S_g$) of each sample was measured using the Archimedes method. The specific gravity values were recorded to three decimal places.

Diameter (D) and Thickness (T)

The diameter (D) and thickness (T) of each sample were measured using an electronic caliper.

Refractive Index ($n_d$) and Abbe Number ($\nu_d$)

For the examples, the samples were processed into 90° prisms, and refractive indices were measured using a refractometer (KPR-3000, manufactured by Kalnew Optical Industry) via the V-block method. The Abbe number and partial dispersion ratio were calculated from the measurements.

For the comparative examples, refractive indices were measured, and Abbe numbers were calculated using the prism coupling method with a prism coupler (Model 2010/M, manufactured by Metricon). In the prism coupling method, a glass sample was polished, the polished surface was placed in close contact with a single crystal rutile prism, and the total reflection angle when light of the measurement wavelength was incident was measured to obtain the refractive index. The three wavelengths of 473 nm, 594.1 nm, and 656 nm were measured five times each, and the average value was the measured value. Furthermore, fitting by the least squares method using the following Drude-Voigt dispersion formula was performed on the obtained actual measured value, and the refractive index at the d line (587.562 nm), F line (486.133 nm), and C line (656.273 nm) and Abbe number ($\nu_d$) were calculated.

[Math. 1]

Math. 1

$$\frac{1}{n^2 - 1} = \frac{\pi m c^2}{e^2 Nf}\left(\frac{1}{\lambda_0^2} - \frac{1}{\lambda^2}\right)$$

(n: refractive index, m: electron mass, c: light velocity, e: charge elementary quantity, N: the number of molecules per unit volume, f: oscillator strength, $\lambda_0$: natural resonance wavelength, $\lambda$: wavelength)
$n_d$ indicates the refractive index of the glass to light at 587.562 nm. The Abbe number ($\nu_d$) was obtained from the following equation (2). $n_C$ and $n_F$ indicate the refractive index of glass to light at wavelengths of 656.273 nm and 486.133 nm, respectively.

$$\nu_d = (n_d - 1) / (n_F - n_c) \quad \dots \quad (2)$$

The value of the refractive index was up to 6 decimal places.

Partial dispersion ratio ($P_{g,F}$)

The partial dispersion ratio ($P_{g,F}$) of each sample indicates the ratio of partial dispersion ($n_g - n_F$) to the principal dispersion ($n_F - n_C$), and was obtained from the following equation (3). $n_g$ indicates the refractive index of glass to light at a wavelength of 435.835 nm. The value of the partial dispersion ratio ($P_{g,F}$) was up to 4 decimal places.

$$P_{g,F} = (n_g - n_F) / (n_F - n_c) \quad \dots \quad (3)$$

Internal Transmittance

The internal transmittance of each sample was measured over a wavelength range of 300-700 nm using parallel polished specimens with a thickness of 4-9 mm. A spectrophotometer (UH4150, Hitachi High-Tech Science Corporation) was used. The measured transmittance was corrected by removing the contribution of reflectance at each wavelength using refractive index measurement data, and the values were converted to transmittance for a 10 mm thickness. Using refractive index data obtained through the V-block method for 10 spectral lines (h, g, F', F, e, d, C', C, r, t), least-squares fitting was performed using the following dispersion curve equation.

[Math. 2]

Math. 2

$$n_{(\lambda)} = A_0 + A_1\lambda^2 + A_2\lambda^4 + A_3\lambda^{-2} + A_4\lambda^{-4} + A_5\lambda^{-6} + A_6\lambda^{-8} + A_7\lambda^{-10} + A_8\lambda^{-12}$$

Using the refractive index values $n_\lambda$ calculated for each wavelength $\lambda$ from the dispersion curve equation, the surface reflectance R at each wavelength and the theoretical transmittance $T_{th}$ (assuming no internal absorption of light, calculated by considering multiple reflections of incident light on the surface and back surface) were calculated as follows. Internal transmittance $T_{(tmm)}$ was then determined using the external transmittance $T_{exp}$ for a thickness tmm and $T_{th}$.

[Math. 3]

Math.3

$$R = \left(\frac{n_\lambda - 1}{n_\lambda + 1}\right)^2$$

$$T_{th} = \frac{(1 - R)^2}{1 - R^2}$$

$$T_{(tmm)} = \frac{T_{exp}}{T_{th}} \times 100 \quad (\%)$$

Using the internal transmittance $T_{(tmm)}$ at a thickness tmm calculated as described above, the transmittance value $T_{(10\ mm)}$ for a thickness of 10 mm was determined using the following equation.

[Math. 4]

Math. 4

$$T_{(10mm)} = \exp\left(\frac{10}{t} \times \ln\left(\frac{T_{(tmm)}}{100}\right)\right) \times 100 \quad (\%)$$

The compositions and physical properties of the glass samples from each example and comparative example are shown in the tables below. Unless otherwise noted, the content of each component is expressed as the mol% of cations. Additionally, the physical property values are for glass in an unpressed state.

[Table 1]

| mol% of cation | Example 1 | Example 2 | Example 3 | Example 4 | Example 5 |
|---|---|---|---|---|---|
| $La^{3+}$ | 23.91 | 21.13 | 21.24 | 24.98 | 24.63 |
| $Ti^{4+}$ | 4.29 | 6.45 | | 4.47 | 12.90 |
| $Zr^{4+}$ | 9.22 | 9. 37 | 9.42 | 9.63 | 9.46 |
| $Si^{4+}$ | 17.34 | 17.62 | 16.12 | 12.70 | 17.78 |
| $Nb^{5+}$ | 22.17 | 20.41 | 26.49 | 23.16 | 14.22 |
| $Ta^{5+}$ | 4.26 | 5.91 | 5.94 | | 1.72 |

(continued)

| mol% of cation | Example 1 | Example 2 | Example 3 | Example 4 | Example 5 |
|---|---|---|---|---|---|
| $Al^{3+}$ | 18.81 | 19.11 | 20.79 | 25.06 | 19.29 |
| $Y^{3+}$ | | | | | |
| Total (%) | 100.00 | 100.00 | 100.00 | 100.00 | 100.00 |
| $Ti^{4+}+Zr^{4+}+Nb^{5+}+Ta^{5+}+Al^{3+}$ | 58.75 | 61.25 | 62.64 | 62.32 | 57.59 |
| Diameter(mm) | 13.67 | 13.40 | 12.52 | 13.90 | 10.30 |
| Thickness(mm) | 5.71 | 5.58 | 5.48 | 6.04 | 5.20 |
| Weight(mg) | 2900 | 2720 | 2440 | 3230 | 1750 |
| $T_g(°C)$ | 786 | 785 | 785 | 795 | 799 |
| $T_x(°C)$ | 961 | 980 | 965 | 947 | 987 |
| $T_x-T_g/(°C)$ | 175 | 195 | 180 | 152 | 188 |
| $S_g$ | 5.00 | 4.94 | 5.03 | 4.88 | 4.81 |
| $n_d$ | 1.996414 | 1.998031 | 2.000312 | 2.001372 | 1.996771 |
| $n_F$ | 2.021460 | 2.023809 | 2.02531 | 2.026211 | 2.022255 |
| $n_C$ | 1.986206 | 1.987558 | 1.990102 | 1.991265 | 1.986438 |
| $n_g$ | 2.042571 | 2.045618 | 2.046313 | 2.047064 | 2.04379 |
| $v_d$ | 28.26 | 27.53 | 28.41 | 28.65 | 27.83 |
| $P_{g,F}$ | 0.5988 | 0.6016 | 0.5965 | 0.5967 | 0.6013 |
| $\lambda_{80}$ (nm) | 385 | 388 | 380 | 382 | 389 |

[Table 2]

| mol% of cation | Example 6 | Example 7 | Example 8 | Example 9 | Example 10 |
|---|---|---|---|---|---|
| $La^{3+}$ | 24.64 | 27.14 | 21.12 | 21.12 | 19.60 |
| $Ti^{4+}$ | 12.56 | 16.30 | 6.46 | 6.46 | 5.99 |
| $Zr^{4+}$ | 8.00 | 6.73 | 9.37 | 9.37 | 12.22 |
| $Si^{4+}$ | 12.00 | 10.10 | 12.62 | 6.62 | 16.34 |
| $Nb^{5+}$ | 20.00 | 16.83 | 20.41 | 20.41 | 22.64 |
| $Ta^{5+}$ | 10.80 | 3.37 | 5.91 | 5.91 | 5.48 |
| $Al^{3+}$ | 12.00 | 19.53 | 24.11 | 30.11 | 17.72 |
| $Y^{3+}$ | | | | | |
| Total (%) | 100.00 | 100.00 | 100.00 | 100.00 | 100.00 |
| $Ti^{4+}+Zr^{4+}+Nb^{5+}+Ta^{5+}+Al^{3+}$ | 63.36 | 62.76 | 66.26 | 72.26 | 64.06 |
| Diameter(mm) | 13.92 | 12.72 | 14.55 | 11.58 | 12.15 |
| Thickness(mm) | 5.47 | 5.83 | 5.71 | 5.64 | 5.32 |
| Weight(mg) | 3230 | 2520 | 3420 | 2226 | 2224 |
| $T_g(°C)$ | 779 | 782 | 783 | 790 | 784 |
| $T_x(°C)$ | 938 | 959 | 960 | 878 | 966 |
| $T_x-T_g/(°C)$ | 159 | 177 | 177 | 88 | 182 |
| $S_g$ | 5.42 | 5.02 | 5.01 | 5.11 | 5.01 |
| $n_d$ | 2.077947 | 2.06034 | 2.012827 | 2.030051 | 2.020535 |

(continued)

| mol% of cation | Example 6 | Example 7 | Example 8 | Example 9 | Example 10 |
|---|---|---|---|---|---|
| $n_F$ | 2.109041 | 2.090096 | 2.038916 | 2.056665 | 2.047495 |
| $n_C$ | 2.065376 | 2.048356 | 2.002223 | 2.019248 | 2.009575 |
| $n_g$ | 2.135767 | 2.115595 | 2.061006 | 2.079135 | 2.070378 |
| $v_d$ | 24.69 | 25.40 | 27.60 | 27.53 | 26.91 |
| $P_{g,F}$ | 0.6121 | 0.6109 | 0.6020 | 0.6005 | 0.6035 |
| $\lambda_{80}$ (nm) | 397 | 396 | 388 | 386 | 391 |

[Table 3]

| mol% of cation | Example 11 | Example 12 | Example 13 | Example 14 | Example 15 | Example 16 |
|---|---|---|---|---|---|---|
| $La^{3+}$ | 20.31 | 14.13 | 20.12 | 21.13 | 9.13 | 29.15 |
| $Ti^{4+}$ | 6.21 | 6.46 | 6.15 | 6.46 | 6.46 | 16.13 |
| $Zr^{4+}$ | 5.16 | 9.37 | 8.92 | | 9.37 | 8.89 |
| $Si^{4+}$ | 16.94 | 17.62 | 21.54 | 17.62 | 17.62 | 16.72 |
| $Nb^{5+}$ | 27.32 | 20.41 | 19.44 | 29.78 | 20.41 | 9.37 |
| $Ta^{5+}$ | 5.68 | 5.91 | 5.63 | 5.91 | 5.91 | 1.61 |
| $Al^{3+}$ | 18.37 | 19.11 | 18.20 | 19.11 | 19.11 | 18.13 |
| $Y^{3+}$ | | 7.00 | | | 12.00 | |
| Total (%) | 100.00 | 100.00 | 100.00 | 100.00 | 100.00 | 100.00 |
| $Ti^{4+}+Zr^{4+}+Nb^{5+}+Ta^{5+}+Al^{3+}$ | 62.75 | 61.26 | 58.34 | 61.26 | 61.26 | 54.13 |
| Diameter(mm) | 12.53 | 11.99 | 12.27 | 12.48 | 12.05 | 10.70 |
| Thickness(mm) | 5.29 | 5.32 | 5.38 | 5.23 | 5.30 | 5.60 |
| Weight(mg) | 2304 | 2122 | 2213 | 2260 | 2110 | 1850 |
| $T_g(°C)$ | 759 | 786 | 778 | 744 | 782 | 807 |
| $T_x(°C)$ | 941 | 916 | 965 | 909 | 894 | 1006 |
| $T_x-T_g/(°C)$ | 182 | 130 | 187 | 165 | 112 | 199 |
| $S_g$ | 4.93 | 4.87 | 4.84 | 4.85 | 4.80 | 4.77 |
| $n_d$ | 2.016786 | 1.9958 | 1.972161 | 2.007686 | 1.990412 | 2.003070 |
| $n_F$ | 2.04476 | 2.021418 | 1.996714 | 2.036056 | 2.015919 | 2.028276 |
| $n_C$ | 2.005459 | 1.985369 | 1.962145 | 1.99623 | 1.980028 | 1.992812 |
| $n_g$ | 2.068644 | 2.043102 | 2.017472 | 2.060411 | 2.037516 | 2.049579 |
| $v_d$ | 25.87 | 27.62 | 28.12 | 25.30 | 27.59 | 28.28 |
| $P_{g,F}$ | 0.6077 | 0.6015 | 0.6005 | 0.6115 | 0.6017 | 0.6007 |
| $\lambda_{80}$ (nm) | 393 | 389 | 388 | 395 | 393 | 391 |

[Table 4]

| mol% of cation | Comparative Example 1 | Comparative Example 2 | Comparative Example 3 |
|---|---|---|---|
| $La^{3+}$ | 30.00 | 30.00 | 5.38 |
| $Ti^{4+}$ | | 10.00 | |
| $Zr^{4+}$ | 10.00 | | 2.15 |
| $Si^{4+}$ | | | 17.78 |

(continued)

| mol% of cation | Comparative Example 1 | Comparative Example 2 | Comparative Example 3 |
|---|---|---|---|
| $Nb^{5+}$ | 60.00 | | |
| $Ta^{5+}$ | | | 1.74 |
| $Al^{3+}$ | | | 12.65 |
| $Y^{3+}$ | | | 4.08 |
| $Ga^{3+}$ | | 60.00 | |
| $B^{3+}$ | | | 28.68 |
| $Ba^{2+}$ | | | 0.78 |
| $Zn^{2+}$ | | | 26.62 |
| $Sb^{3+}$ | | | 0.15 |
| Total (%) | 100.00 | 100.00 | 100.00 |
| $(Ti^{4+}+Zr^{4+}+Nb^{5+}+Ta^{5+}+Al^{3+})$ | 70.00 | 10.00 | 16.54 |
| Diameter(mm) | - | - | - |
| Thickness(mm) | - | - | - |
| Weight(mg) | - | - | - |
| $T_g$ (°C) | 736 | 755 | 620 |
| $T_x$ (°C) | 830 | 827 | Not detected |
| $T_x$-$T_g$/(°C) | 94 | 72 | - |
| $S_g$ | 5.65 | 5.73 | 3.95 |
| $n_d$ | 2.241266 | 1.988424 | 1.67267 |
| $n_F$ | 2.28232 | 2.011445 | 1.68226 |
| $n_C$ | 2.224485 | 1.978866 | 1.66856 |
| $n_g$ | - | - | 1.68985 |
| $v_d$ | 21.46 | 30.34 | 49.1 |
| $P_{g,F}$ | - | - | 0.5540 |
| $\lambda_{80}$ (nm) | - | - | - |

From the above, it was confirmed that the optical glass of each example has high refractive indices, high transmittance, low specific gravity, and devitrification resistance stability at a high level. Furthermore, it was confirmed that the glass could be manufactured in sizes exceeding 10 mm in diameter using the floating melting method.

[Sign Explanation]

1... Imaging Device, 101...Camera body, 102...Lens barrel, 103...Lens, 104...Sensor chip, 105...Glass substrate, 106...Multi-chip module, CAM...Imaging device (Camera with non-interchangeable lens), WL... Photographing lens, M1...Liquid crystal monitor, EF...Auxiliary light emitting unit, B1...Release button, B2... Function button, 2...Multi-photon microscope, 201...Pulse laser device, 202...Pulse division device, 203...Beam adjustment unit, 204,205,212...Dichroic mirror, 206...Objective lens, 207,211,213...Fluorescence detection unit, 208...Condensing lens, 209...Pinhole, 210...Image forming lens, S...Sample, 3...Joining lens, 301...first lens element, 302...Second lens element, 303...joint member, 4...Gas jet floating furnace, 401...Stage, 402...Pedestal, 403...Laser light source, 404,405...Mirror, 406...Radiation thermometer, 407... Computer, 408...CCD camera, 409...Monitor, 410...Gas flow rate regulator, L...Laser light, M...Raw material

**Claims**

1. An optical glass comprising:

   by mol% of a cation,
   5% to 35% of a content rate of $La^{3+}$;
   5% to 25% of a content rate of $Si^{4+}$;
   5% to 35% of a content rate of $Nb^{5+}$;
   5% to 35% of a content rate of $Al^{3+}$; and
   45% to 80% of a total content rate of $Ti^{4+}$, $Zr^{4+}$, $Nb^{5+}$, $Ta^{5+}$, and $Al^{3+}$ ($Ti^{4+} + Zr^{4+} + Nb^{5+} + Ta^{5+} + Al^{3+}$).

2. The optical glass according to claim 1, wherein, by mol% of a cation,
   a content rate of $Ti^{4+}$ is from 0% to 20%.

3. The optical glass comprising:

   by mol% of a cation,
   5% to 35% of a content rate of $La^{3+}$;
   5% to 25% of a content rate of $Si^{4+}$;
   5% to 35% of a content rate of $Nb^{5+}$;
   0% to 20% of a content rate of $Ti^{4+}$; and
   45% to 80% of a total content rate of $Ti^{4+}$, $Zr^{4+}$, $Nb^{5+}$, $Ta^{5+}$, and $Al^{3+}$ ($Ti^{4+} + Zr^{4+} + Nb^{5+} + Ta^{5+} + Al^{3+}$).

4. The optical glass according to any one of claims 1 to 3, wherein, by mol% of a cation,
   a content rate of $Zr^{4+}$ is from 0% to 15%.

5. The optical glass according to any one of claims 1 to 4, wherein, by mol% of a cation,
   a content rate of $Ta^{5+}$ is from 0% to 15%.

6. The optical glass according to any one of claims 1 to 5, wherein, by mol% of a cation,
   a content rate of $Y^{3+}$ is from 0% to 15%.

7. The optical glass according to any one of claims 1 to 6, wherein
   $B^{3+}$ is not substantially contained.

8. The optical glass according to any one of claims 1 to 7, wherein
   a wavelength ($\lambda_{80}$) at which the internal transmittance per 10 mm of the optical glass reaches 80% is equal to or less than 420 nm.

9. The optical glass according to any one of claims 1 to 8, wherein
   a refractive index of the optical glass with respect to a d-line is from 1.95 to 2.15.

10. The optical glass according to any one of claims 1 to 9, wherein
    an Abbe number of the optical glass is from 20 to 35.

11. The optical glass according to any one of claims 1 to 10, wherein
    a partial dispersion ratio ($P_{g,F}$) of the optical glass satisfies the following formula:

$$-0.00403 \times \nu_d + 0.704 < P_{g,F} < -0.00403 \times \nu_d + 0.717.$$

12. The optical glass according to any one of claims 1 to 11, wherein
    a specific gravity ($S_g$) of the optical glass is from 4.6 to 5.6.

13. The optical glass according to any one of claims 1 to 12, wherein
    a temperature difference ($\Delta T = T_x - T_g$) expressed by a glass transition temperature ($T_g$) and a crystallization onset temperature ($T_x$) of the optical glass is from 80 to 200 degrees Celsius.

**14.** The optical glass according to any one of claims 1 to 13, wherein
a length of the optical glass in a major axis direction is equal to or more than 10 mm.

**15.** An optical element comprising the optical glass according to any one of claims 1 to 14.

**16.** An optical system comprising the optical element according to claim 15.

**17.** An objective lens for a microscope comprising the optical system according to claim 16.

**18.** An interchangeable lens for a camera comprising the optical system according to claim 16.

**19.** An optical device comprising the optical system according to claim 16.

**20.** A cemented lens comprising a first lens element and a second lens element, wherein
at least one of the first lens element and the second lens element is formed of the optical glass according to any one of claims 1 to 14.

**21.** An optical system comprising the cemented lens according to claim 20.

**22.** An objective lens for a microscope comprising the optical system according to claim 21.

**23.** An interchangeable lens for a camera comprising the optical system according to claim 21.

**24.** An optical device comprising the optical system according to claim 21.

*Fig. 1*

*Fig. 2*

*Fig. 3*

*Fig. 4*

Fig. 5

Fig.6

*Fig.7*

*Fig. 8*

Fig. 9

## INTERNATIONAL SEARCH REPORT

| International application No. |
|---|
| **PCT/JP2023/032958** |

**A. CLASSIFICATION OF SUBJECT MATTER**

***C03C 3/097***(2006.01)i; ***G02B 1/00***(2006.01)i
FI: C03C3/097; G02B1/00

According to International Patent Classification (IPC) or to both national classification and IPC

**B. FIELDS SEARCHED**

Minimum documentation searched (classification system followed by classification symbols)

C03C1/00-14/00; G02B1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| A | WO 2010/137276 A1 (NIPPON SHEET GLASS CO., LTD.) 02 December 2010 (2010-12-02) entire text | 1-24 |
| A | WO 2018/037797 A1 (THE UNIVERSITY OF TOKYO) 01 March 2018 (2018-03-01) entire text | 1-24 |
| A | WO 2019/058617 A1 (NIKON CORP.) 28 March 2019 (2019-03-28) entire text | 1-24 |
| A | JP 2015-040171 A (HOYA CORP.) 02 March 2015 (2015-03-02) entire text | 1–24 |
| A | JP 2018-525310 A (CDGM GLASS CO., LTD.) 06 September 2018 (2018-09-06) entire text | 1-24 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2023** | **28 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/032958**

| Patent document cited in search report | | | Publication date (day/month/year) | Patent family member(s) | | | Publication date (day/month/year) |
|---|---|---|---|---|---|---|---|
| WO | 2010/137276 | A1 | 02 December 2010 | (Family: none) | | | |
| WO | 2018/037797 | A1 | 01 March 2018 | US | 2019/0185369 | A1 | |
| | | | | entire document | | | |
| | | | | US | 2022/0119302 | A1 | |
| | | | | EP | 3505499 | A1 | |
| | | | | CN | 109562980 | A | |
| | | | | CN | 114605069 | A | |
| | | | | JP | 2022-106744 | A | |
| WO | 2019/058617 | A1 | 28 March 2019 | US | 2020/0223739 | A1 | |
| | | | | entire document | | | |
| | | | | US | 2022/0064051 | A1 | |
| | | | | EP | 3686169 | A1 | |
| | | | | CN | 111108074 | A | |
| | | | | CN | 114835393 | A | |
| | | | | JP | 2022-71000 | A | |
| JP | 2015-040171 | A | 02 March 2015 | US | 2016/0194237 | A1 | |
| | | | | entire document | | | |
| | | | | WO | 2015/025943 | A1 | |
| | | | | CN | 105452181 | A | |
| | | | | KR | 10-2016-0031017 | A | |
| | | | | CN | 110128004 | A | |
| | | | | CN | 110255890 | A | |
| JP | 2018-525310 | A | 06 September 2018 | US | 2018/0230038 | A1 | |
| | | | | entire document | | | |
| | | | | WO | 2017/028726 | A1 | |
| | | | | CN | 105198206 | A | |
| | | | | TW | 201711974 | A | |
| | | | | CN | 107445473 | A | |

Form PCT/ISA/210 (patent family annex) (January 2015)

**EP 4 596 508 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022158015 A
- JP 7081973 A